**Europäisches Patentamt**

(19) **European Patent Office**

**Office européen des brevets**

(11) Numéro de publication: **0 196 967**
**A1**

# (12) DEMANDE DE BREVET EUROPEEN

(21) Numéro de dépôt: **86400637.4**

(22) Date de dépôt: **25.03.86**

(51) Int. Cl.⁴: **F 02 B 37/12**

(30) Priorité: **27.03.85 FR 8504574**

(43) Date de publication de la demande:
**08.10.86 Bulletin 86/41**

(84) Etats contractants désignés:
**DE FR GB IT**

(71) Demandeur: **AUTOMOBILES PEUGEOT**
**75, avenue de la Grande Armée**
**F-75116 Paris(FR)**

(71) Demandeur: **AUTOMOBILES CITROEN**
**62 Boulevard Victor-Hugo**
**F-92200 Neuilly-sur-Seine(FR)**

(72) Inventeur: **Sedille, Marcel**
**13 rue de Siam**
**F-75016 Paris(FR)**

(72) Inventeur: **Le Creurer, Maurice**
**77 rue du Maréchal Foch**
**F-95150 Taverny(FR)**

(74) Mandataire: **Moncheny, Michel et al,**
**c/o Cabinet Lavoix 2 Place d'Estienne d'Orves**
**F-75441 Paris Cedex 09(FR)**

(54) **Procédé et dispositif d'alimentation d'un moteur suralimenté à turbocompresseur.**

(57) Selon l'invention, on utilise un turbo-compresseur (10, 20) dont la turbine (10) est à ouverture réglable et dont le compresseur (20) est muni d'un distributeur (23) assurant la mise en pré-rotation de l'air à l'entrée de ce compresseur. Ce distributeur (23) est commandé en fonction du débit d'air dans le compresseur, de façon à diminuer la pré-rotation lorsque le débit d'air augmente. Ce type de régulation permet d'augmenter le couple moteur à bas régime et d'améliorer la capacité de reprise.

FIG. 1

1

La présente invention concerne les moteurs suralimentés par turbocompresseur, notamment pour véhicules automobiles.

On sait que de tels moteurs présentent un certain nombre d'inconvénients, et en particulier les suivants :

- manque de couple moteur à bas régime.

- manque de capacité de reprise.

Le couple maximal à bas régime est en effet limité par le pompage du compresseur. Quant à la rapidité des accélérations, elle est limitée par l'inertie du ou des turbocompresseur(s), qui à bas régime tourne(nt) à vitesse très réduite.

Par ailleurs, l'emploi de turbines à géométrie fixe avec soupape de by-pass présente l'inconvénient, aux régimes où cette soupape est ouverte, de maintenir la pression d'échappement des gaz à une valeur élevée bien supérieure à la pression d'admission et par conséquent de laisser dans les fonds de cylindres une masse élevée de gaz chauds provoquant un échauffement excessif des pièces mécaniques. De plus, la présence de ces gaz chauds est préjudiciable à un bon remplissage et peut provoquer pour les moteurs à allumage commandé l'apparition prématurée d'une combustion détonante.

On connaît également (DE-A-3 002 701) un dispositif d'alimentation pour un moteur suralimenté, comprenant une turbine à ouverture variable et un compresseur entraîné par cette turbine et muni d'un obturateur réglable permettant de régler le débit d'air à l'entrée de ce compresseur tout en imprimant à l'air admis un mouvement de rotation préalable ou mouvement de pré-rotation. Un tel agencement est intéressant, mais tel qu'il est utilisé dans le document précité, il ne permet pas de remédier simultanément à l'ensemble des défauts énumérés ci-dessus.

On connait par ailleurs (DE-A-2060271) un compresseur à l'entrée duquel se trouvent des moyens permettant de réduire la pré-rotation de l'air lorsque le débit augmente. Ces moyens sont constitués par des lames flexibles qui se déforment lors d'une augmentation de débit. Un tel agencement ne peut cependant fonctionner de façon satisfaisante ; en effet :

- il ne permet pas d'obtenir une pré-rotation nulle ;

- il est inopérant aux faibles débits ;

- il est sensible à l'instabilité de l'écoulement de l'air et induit lui-même de telles instabilités ;

- la loi de variation de l'angle des lames en fonction du débit est, par nature, continue et ne peut être choisie de façon optimale.

L'objectif que se propose d'atteindre l'invention est de remédier aux divers inconvénients énoncés ci-dessus.

Elle a pour objet un procédé de commande de l'alimentation d'un moteur suralimenté à partir d'un compresseur entraîné par une turbine, ce compresseur étant muni à son aspiration de moyens imprimant à l'air admis un mouvement de mise en pré-rotation variable en fonction du débit d'air dans le compresseur, caractérisé en ce que lesdits moyens de mise en pré-rotation sont commandés de façon positive en fonction d'un paramètre représentatif du débit d'air dans le compresseur.

De façon plus précise, la mise en pré-rotation de l'air à l'entrée du compresseur diminue lorsque le débit d'air augmente.

De préférence, une valeur minimale de la mise en pré-rotation de l'air a l'entrée du compresseur est atteinte pour une valeur du débit d'air inférieure à une valeur maximale de ce débit.

L'invention a également pour objet un dispositif d'alimentation pour moteur suralimenté, comprenant une turbine à ouverture variable et un compresseur entrainé par cette turbine et muni a son aspiration de moyens réglables permettant d'imprimer à l'air admis dans ce compresseur un mouvement de rotation préalable, caractérisé en ce que la position des moyens réglables et l'éventuelle mise en rotation de l'air qui en résulte sont réglées de façon positive en fonction d'un paramètre représentatif du débit d'air dans le compresseur.

L'invention va être décrite plus en détail ci-dessous en se référant aux dessins annexés, donnés uniquement a titre d'exemple et sur lesquels :

3

- la Fig. 1 est un schéma illustrant un dispositif d'alimentation suivant l'invention ;

- les Fig. 2 et 3 sont deux vues schématiques illustrant des moyens de réglage de l'ouverture de la turbine et d'un distributeur de pré-rotation associé au compresseur ;

- la Fig. 4 est un diagramme illustrant un mode de réglage du distributeur en fonction du débit d'air ;

- la Fig. 5 est un diagramme illustrant le fonctionnement du dispositif et les avantages qu'il permet d'obtenir ;

- la Fig. 6 est également un diagramme illustrant certains avantages de l'invention ; et,

- la Fig. 7 est une vue schématique d'une variante.

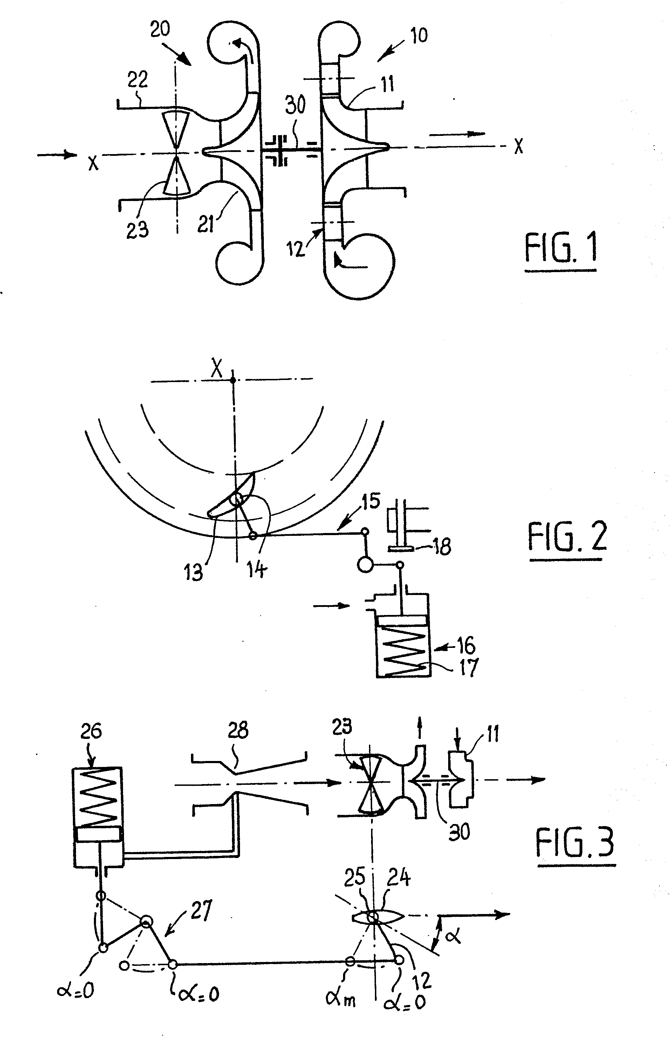

On a représenté sur la Fig. 1 un ensemble de turbocompresseur tel qu'utilisé dans un circuit d'alimentation pour moteur suralimenté. Cet ensemble comprend une turbine 10 dont la roue 11 est entraînée par les gaz d'échappement du moteur associé, après passage dans un distributeur 12 placé à l'entrée de cette turbine.

Cette dernière entraine, par l'intermédiaire d'un arbre 30, la roue 21 d'un compresseur 20 sur l'aspiration 22 duquel est placé un distributeur 23 qui sera décrit un peu plus en détail ci-dessous.

On a représenté schématiquement à la Fig.2 un mécanisme de commande du distributeur d'admission de la turbine 10. Ce distributeur est constitué par une série d'éléments 13 montés pivotants autour d'axes parallèles à l'axe (X-X) de la turbine. La position angulaire de ces éléments est commandée par l'intermédiaire d'une tringlerie 15 à partir d'un actionneur ou

4

d'une capsule 16 soumise à la pression régnant à l'admission du moteur auquel le dispositif est associé. Cette pression s'exerce à l'encontre d'un ressort 17 dont les caractéristiques sont choisies de façon habituelle. De même, les autres éléments distributeurs de la turbine sont commandés simultanément par un mécanisme connu, désigné par l'expression "cercle de vannage".

Il est prévu également une butée 18 qui détermine l'ouverture minimale de la turbine et qui est disposée en un emplacement convenable du mécanisme de réglage. La position de cette butée est de préférence réglable. De façon connue, le réglage de l'ouverture de la turbine est effectué de manière à maintenir la pression de refoulement du compresseur au-dessous d'une valeur limite, jusqu'à atteindre une ouverture minimale déterminée par la butée 18.

On a représenté sur la Fig. 3 un schéma d'un mécanisme de commande du distributeur de pré-rotation 23 du compresseur, dont les éléments sont constitués par des volets rigides 24 montés pivotant autour d'axes 25 s'étendant radialement par rapport à l'axe X-X du turbocompresseur. Ce mécanisme comprend un actionneur ou une capsule à dépression 26 dont l'élément mobile est relié aux différents volets par une tringlerie 27 et par un mécanisme du type cercle de vannage. Cette capsule est soumise, dans l'exemple choisi, à la dépression engendrée dans un Venturi 28 lui-même placé sur l'aspiration du compresseur. Le Venturi 28, ou tout autre système équivalent de mesure du débit masse d'air peut, aussi et suivant les besoins, être disposé au refoulement du compresseur en utilisant toutefois, selon les règles de l'art correspondantes, non seulement la dépression qu'il crée, mais aussi la pression de refoulement du compresseur.

0196967

5

Sur ce schéma de la Fig. 3, la flèche F représente la direction de l'air à l'entrée du compresseur lorsqu'aucune pré-rotation n'est engendrée. L'angle $\alpha$ d'orientation des volets 24 par rapport à la direction de la flèche F caractérise par contre une mise en pré-rotation de l'air à l'aspiration du compresseur.

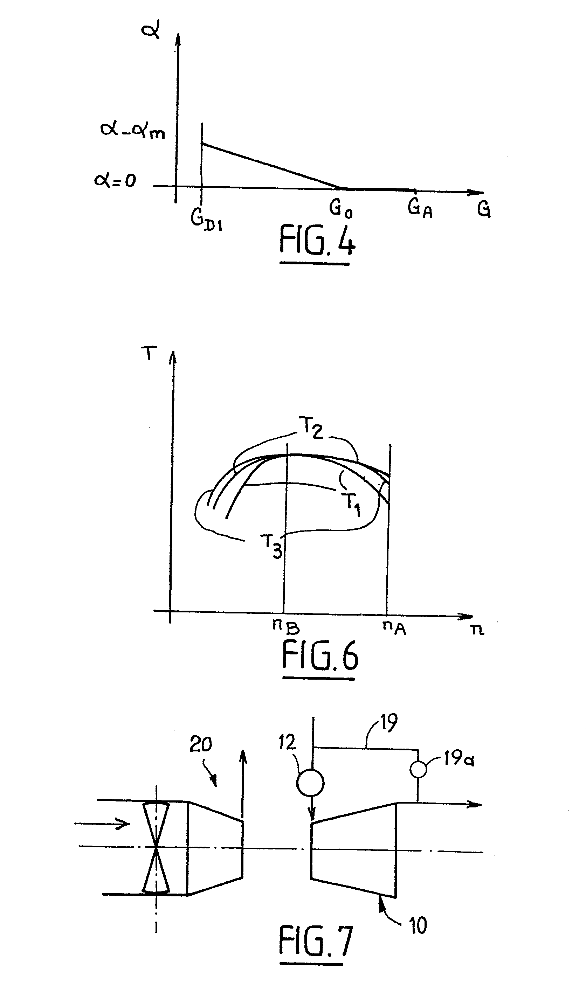

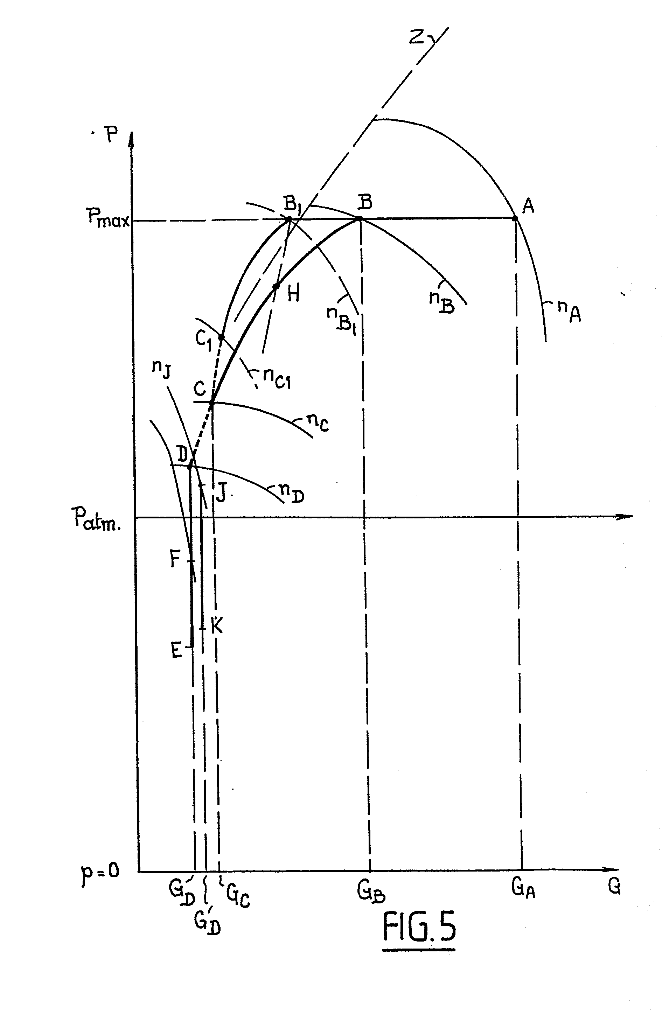

Il résulte de ce qui précède que conformément à l'invention, la position du distributeur placé à l'aspiration du compresseur, qui détermine la présence et l'importance du mouvement de pré-rotation à l'entrée de ce compresseur, est commandée de façon positive en fonction d'un paramètre représentatif du débit d'air dans le compresseur. On va expliquer ci-dessous en quoi ce type de régulation est particulièrement efficace et intéressant. Pour cela, on se reportera aux diagrammes des Fig. 4 à 6.

Sur la Fig. 4 est représenté un exemple de loi de variation de l'angle $\alpha$ représentatif de la mise en pré-rotation de l'air à l'aspiration du compresseur, en fonction du débit G dans ce compresseur. Cet angle $\alpha$ varie à partir d'une valeur maximale $\alpha_m$ correspondant à un débit minimal $G_D$ dans le compresseur, jusqu'à une valeur minimale qui peut être nulle et qui est atteinte pour un débit $G_0$ inférieur au débit maximal représenté sur le diagramme par la valeur $G_A$. Cette valeur de $\alpha_m$ peut être par exemple de 60 à 80° environ.

Le diagramme de la Fig. 5 représente la valeur de la pression P d'alimentation du moteur en fonction du débit G dans le compresseur, pour une configuration classique et pour une configuration incorporant l'invention.

6

Pour un turbocompresseur habituel comportant un compresseur à aspiration directe et une turbine à géométrie fixe, munie d'une soupape de by-pass, les points de fonctionnement du compresseur correspondant au couple maximal à divers régimes du moteur, sont représentés par la courbe A, B, C où le point A correspond au régime maximal du moteur (la soupape de by-pass ayant son ouverture maximale) et où B correspond au régime du moteur pour lequel ladite soupape se ferme. Au-dessous de ce régime, les points de fonctionnement au couple maximal se situent sur la courbe B, C, le point C correspondant au régime minimal du moteur. Les vitesses du turbocompresseur sont alors respectivement $n_A$, $n_B$, $n_C$ et les débits d'air $G_A$, $G_B$, $G_C$.

Comme cela est connu, les points A, B, C sont situés à droite d'une courbe de pompage Z du compresseur.

Dans le cas d'un moteur à allumage commandé, le ou les papillon(s) de réglage d'air, commandé(s) par la pédale d'accélérateur provoque(nt), lorsqu'on veut faire varier le couple, un laminage, de sorte que la pression devant les soupapes d'admission du moteur baisse, de même que le débit des gaz d'échappement et que la vitesse de rotation du turbocompresseur. Pour un régime minimal du moteur, le point de fonctionnement du compresseur s'établit au point D, pour un couple à vide. Si le papillon est disposé entre le compresseur et le moteur, il provoque un laminage DE, le point E représentant la pression à l'entrée du moteur, qui est inférieure à la pression atmosphérique. Ce régime correspond au ralenti du moteur.

Le procédé et le dispositif de régulation suivant l'invention permettent de décaler vers la gauche du diagramme la courbe de fonctionnement du compresseur, correspondant à un couple maximal du moteur. En effet, considérant un point H de la courbe BC, si l'on actionne le distributeur de la turbine dans le sens de la fermeture, la pression à l'échappement du moteur croît, la puissance disponible sur la turbine croît également, de même que la vitesse du compresseur. Grâce à la commande du distributeur de pré-rotation de ce compresseur, la courbe de fonctionnement de l'ensemble compresseur et distributeur est plus inclinée et correspond à un pompage reculé et sensiblement décalé vers la gauche sur le diagramme par rapport à la courbe Z. On peut ainsi atteindre un point de fonctionnement $B_1$ où la pression d'air maximale admissible est atteinte. Pour le même régime du moteur $N_H$, le couple moteur est approximativement accru dans le rapport des débits d'air $G_H$ et $G_{B1}$ ou ce qui revient au même dans le rapport des pressions $p_H$ et $p_{B1}$, en supposant que le compresseur soit comme c'est souvent le cas suivi d'un réfrigérant d'air.

De même le fonctionnement au couple maximal à la vitesse minimale du moteur, qui correspondait au point C, correspond, avec une ouverture de turbine réduite, à un point tel que $C_1$, de sorte que le couple maximal est accru d'autant.

On voit donc que dans toute la zone comprise entre les points B et C, le dispositif suivant l'invention permet d'obtenir une augmentation sensible du couple moteur disponible.

Au ralenti, si l'on conserve l'ouverture réduite de la turbine, la pression à l'échappement du moteur croît de sorte qu'un débit d'air un peu supérieur est nécessaire, soit $G'_D$. Sur le graphique de la Fig. 5, le point de fonctionnement du compresseur et de son distributeur vient par exemple en J. Compte tenu de la valeur de la pression à l'admission de la turbine, qui est plus élevée qu'en F, la vitesse du turbocompresseur en J est $n_J$, supérieure à $n_F$. Le laminage au passage du papillon des gaz, représenté par JK, est supérieur au laminage représenté par FE et il en résulte donc au total une capacité d'accélération du moteur plus élevée, à cause de la plus grande vitesse du turbocompresseur et de la pression plus élevée devant le papillon.

La Fig. 6 représente le couple maximal $\Gamma$ en fonction du régime n du moteur, pour un turbocompresseur dans différentes configurations. Dans une configuration classique, ce couple est représenté par la courbe $\Gamma_1$. Avec la disposition suivant l'invention, le couple est représenté par la courbe $\Gamma_2$ et l'on peut donc constater que la disposition suivant l'invention est sensiblement plus favorable.

Suivant une autre caractéristique de l'invention, la position de la butée 18 déterminant l'ouverture minimale de la turbine et visible à la Fig. 2, est réglable et peut être déplacée par un mécanisme convenable, par exemple du type vis et écrou comme représenté Fig. 2. La position d'ouverture minimale choisie, fixée par cette butée, est déterminée par l'expérience de façon à réaliser un compromis entre le couple disponible et la consommation du moteur.

On peut, dans le même esprit, choisir à volonté la plage $G_0G_A$ pour laquelle l'angle $\alpha$ des éléments du distributeur à l'entrée du compresseur, est nul, c'est-à-dire la plage pour laquelle aucune prérotation de l'air n'est réalisée à l'aspiration de ce compresseur. A titre d'exemple, le débit $G_0$ peut être de l'ordre de 65 à 80 % du débit $G_A$.

Dans la variante de la Fig. 7, la turbine comporte de plus un conduit 19 et une soupape 19$^a$ de by-pass, commandée en fonction de la pression de refoulement du compresseur et qui ne s'ouvre que lorsque l'ouverture de la turbine est elle-même maximale. Ceci permet d'utiliser une turbine légèrement plus petite et d'améliorer ainsi les caractéristiques à bas régime du moteur, au détriment toutefois de celles au-delà d'un certain régime représenté par exemple par n' sur la Fig. 6. On obtient ainsi une courbe de couple $T_3$ sur cette Fig. 6.

Les modalités de l'invention qui ont été décrites ci-dessus peuvent comporter des variantes qui sont du domaine de l'homme de l'art et n'en altèrent aucunement les principes. En particulier et comme déjà signalé :

- le dispositif de pré-rotation à l'entrée du compresseur peut être d'un type quelconque autre que celui représenté du moment qu'il répond à l'objectif précis de fournir une pré-rotation variable et d'un sens déterminé au fluide à l'entrée du compresseur ;

- le réglage de l'ouverture de la turbine peut aussi être d'un type quelconque du moment qu'il réalise l'objectif précis de faire varier son débit pour une pression amont déterminée à l'exclusion bien entendu d'un simple laminage.

En outre, les régulations du distributeur de pré-rotation et de l'ouverture turbine qui ont été représentées sous la forme mécanique directe pour la commodité de l'exposé peuvent être d'un type quelcon-

10

que, pneumatique, électrique, électronique et être du type direct ou indirect, asservi ou non ou du type pas à pas du moment qu'elles réalisent les objectifs précisés.

En variante, la commande du distributeur de pré-rotation du compresseur peut être effectuée, non pas en fonction du débit d'air, mais en fonction de tout autre paramètre qui lui est lié ou varierait dans le même sens. Pour les moteurs à allumage commandé, par exemple, ce pourrait être le débit de combustible. Dans tous les cas, ce pourrait être également une combinaison de la vitesse du moteur et de la pression à l'aspiration des cylindres.

11

REVENDICATIONS

1. Procédé de commande de l'alimentation d'un moteur suralimenté à partir d'un compresseur (20) entraîné par une turbine (10), ce compresseur étant muni à son aspiration de moyens imprimant à l'air admis un mouvement de mise en pré-rotation variable, caractérisé en ce que lesdits moyens de mise en pré-rotation sont commandés de façon positive en fonction d'un paramètre représentatif du débit d'air dans le compresseur.

2. Procédé suivant la revendication 1, caractérisé en ce que, comme connu en soi, la mise en pré-rotation de l'air à l'entrée du compresseur diminue lorsque le débit d'air augmente.

3. Procédé selon la revendication 2, caractérisé en ce qu'une valeur minimale de la mise en pré-rotation de l'air à l'entrée du compresseur est atteinte pour une valeur du débit d'air inférieure à une valeur maximale de ce débit.

4. Procédé suivant la revendication 1, caractérisé en ce que la position des moyens (24) de mise en pré-rotation est commandée en fonction de la dépression régnant dans un venturi (28) placé sur l'aspiration du compresseur.

5. Procédé selon l'une quelconque des revendications 1 et 2, selon lequel on règle l'ouverture de la turbine de manière à maintenir la pression de refoulement du compresseur au-dessous d'une valeur limite, jusqu'à atteindre une ouverture minimale déterminée, caractérisé en ce qu'on règle la position de cette butée pour obtenir une position déterminée d'ouverture minimale de la turbine.

6. Procédé suivant l'une quelconque des

12

revendications 1 à 5, caractérisé en ce que la turbine (10) étant équipée d'un conduit (19) et d'une soupape ($19^a$) de by-pass, cette soupape est commandée de façon à ne s'ouvrir qu'à partir du moment où l'ouverture de la turbine est maximale.

7. Dispositif d'alimentation pour moteur suralimenté, comprenant une turbine (10) à ouverture variable et un compresseur (20) entraîné par cette turbine et muni à son aspiration de moyens réglables permettant d'imprimer à l'air admis dans ce compresseur un mouvement de rotation préalable, caractérisé en ce que la position des moyens réglables (23) et l'éventuelle mise en rotation de l'air qui en résulte sont réglées de façon positive en fonction d'un paramètre représentatif du débit d'air dans le compresseur.

8. Dispositif selon la revendications 7, dans lequel les moyens de mise en pré-rotation comprennent des volets rigides (24) montés pivotants autour d'axes (25) perpendiculaires à l'axe (X-X) du compresseur et commandés par un mécanisme extérieur, caractérisé en ce que ledit mécanisme comprend une tringlerie (27) et un actionneur (26) soumis à la dépression régnant dans un venturi (28) placé sous l'aspiration du compresseur.

9. Dispositif selon l'une quelconque des revendications 7 et 8, caractérisé en ce qu'il est prévu une butée (18) réglable en position, déterminant une ouverture minimale de la turbine (10).

10. Dispositif selon l'une quelconque des revendications 7 et 8, caractérisé en ce que ,comme connu en soi, la turbine (10) est équipée d'un conduit (19) et d'une soupape ($19^a$) de by-pass commandée en fonction

13

de la pression de refoulement du compresseur, pour ne s'ouvrir qu'à partir du moment où l'ouverture de la turbine est maximale.

FIG. 1

FIG. 2

FIG. 3

FIG.4

FIG.6

FIG.7

0196967

FIG.5

## Office européen des brevets

### RAPPORT DE RECHERCHE EUROPEENNE

### DOCUMENTS CONSIDERES COMME PERTINENTS

| Catégorie | Citation du document avec indication en cas de besoin des parties pertinentes | Revendication concernée | CLASSEMENT DE LA DEMANDE (Int Cl.4) |
|---|---|---|---|
| Y | US-A-3 232 043  (R. BIRMANN)<br><br>* Colonne 2, ligne 29 - colonne 7, ligne 39; colonne 8, lignes 73-75; figures 1-7 * | 1,2,5, 7,9 | F 02 B  37/12 |
| A | | 4,8 | |
| Y | EP-A-0 090 122  (RENAULT SPORT)<br><br>* Page 4, ligne 19 - page 8, ligne 20; page 9, lignes 9-18; figures 1,2 * | 1,2,5, 7,9 | |
| A | | 6,8,10 | |
| A,D | DE-A-2 060 271  (KÜHNLE, KOPP & KAUSCH)<br>* Page 5, alinéa 2 - page 6, alinéa 2; figures 2-5 * | 1-3,7 | **DOMAINES TECHNIQUES RECHERCHES (Int Cl 4)**<br><br>F 02 B<br>F 04 D |
| A | PATENTS ABSTRACTS OF JAPAN, vol. 8, no. 5 (M-267) [1442], 11 janvier 1984; & JP - A - 58 167 825 (HINO JIDOSHA KOGYO K.K.) 04-10-1983<br>* Résumé; figure * | 1 | |
| A | DE-A-2 558 878  (DAIMLER-BENZ)<br>* Page 6, dernier alinéa - page 7, milieu de la page; figure 1 * | 6,10 | |

--- -/-

Le présent rapport de recherche a été établi pour toutes les revendications

| Lieu de la recherche | Date d'achèvement de la recherche | Examinateur |
|---|---|---|
| LA HAYE | 18-06-1986 | FRIDEN C.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

| DOCUMENTS CONSIDERES COMME PERTINENTS | | Page 2 |
|---|---|---|

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 272 830 (J. EBERSPÄCHER) <br> * Page 2, colonne de gauche, dernier alinéa - colonne de droite, premier alinéa; figure 1 * <br><br> ----- | 6,10 | |
| | | | **DOMAINES TECHNIQUES RECHERCHES (Int. Cl.4)** |

Le present rapport de recherche a été établi pour toutes les revendications

| Lieu de la recherche <br> LA HAYE | Date d'achevement de la recherche <br> 18-06-1986 | Examinateur <br> FRIDEN C.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant